Europäisches Patentamt

European Patent Office

Office européen des brevets

(19)

(11) Numéro de publication : **0 088 009**
**B1**

# (12) FASCICULE DE BREVET EUROPÉEN

(45) Date de publication du fascicule du brevet :
07.08.85

(21) Numéro de dépôt : 83400359.2

(22) Date de dépôt : 22.02.83

(51) Int. Cl.⁴ : **C 04 B 35/46, H 01 G   4/12**

(54) Composition céramique diélectrique à base de titanate de baryum stable en fonction de la température, et condensateur utilisant cette composition.

(30) Priorité : 02.03.82 FR 8203423

(43) Date de publication de la demande :
07.09.83 Bulletin 83/36

(45) Mention de la délivrance du brevet :
07.08.85 Bulletin 85/32

(84) Etats contractants désignés :
AT DE GB NL

(56) Documents cités :
DE-A- 2 135 935
FR-A- 2 397 374
FR-A- 2 508 436
US-A- 3 775 142
CHEMICAL ABSTRACTS, vol. 85, no. 12, 20 septembre 1976, page 573, no. 86236w, Columbus Ohio USA;
CHEMICAL ABSTRACTS, vol. 85, no. 14, 4 octobre
1976, page 626, no. 103039d, Columbus Ohio USA;

(73) Titulaire : **L.C.C.-C.I.C.E. - COMPAGNIE EURO-
PEENNE DE COMPOSANTS ELECTRONIQUES
50, rue Jean-Pierre Timbaud B.P. 301
F-92402 Courbevoie (FR)**

(72) Inventeur : **Lagrange, Alain
THOMSON-CSF SCPI 173, bld Haussmann
F-75379 Paris Cedex 08 (FR)**
Inventeur : **Rossello, Alain
THOMSON-CSF SCPI 173, bld Haussmann
F-75379 Paris Cedex 08 (FR)**

(74) Mandataire : **Ruellan-Lemonnier, Brigitte et al
THOMSON-CSF SCPI 173, boulevard Haussmann
F-75379 Paris Cedex 08 (FR)**

EP 0 088 009 B1

Jouve, 18, rue St-Denis, 75001 Paris, France

## Description

La présente invention concerne une composition céramique diélectrique à base de titanate de baryum ainsi qu'un condensateur utilisant cette composition. Elle se rapporte plus particulièrement à une composition céramique ayant une faible variation relative de capacité dans une très large gamme de températures lui permettant d'atteindre la classe BX.

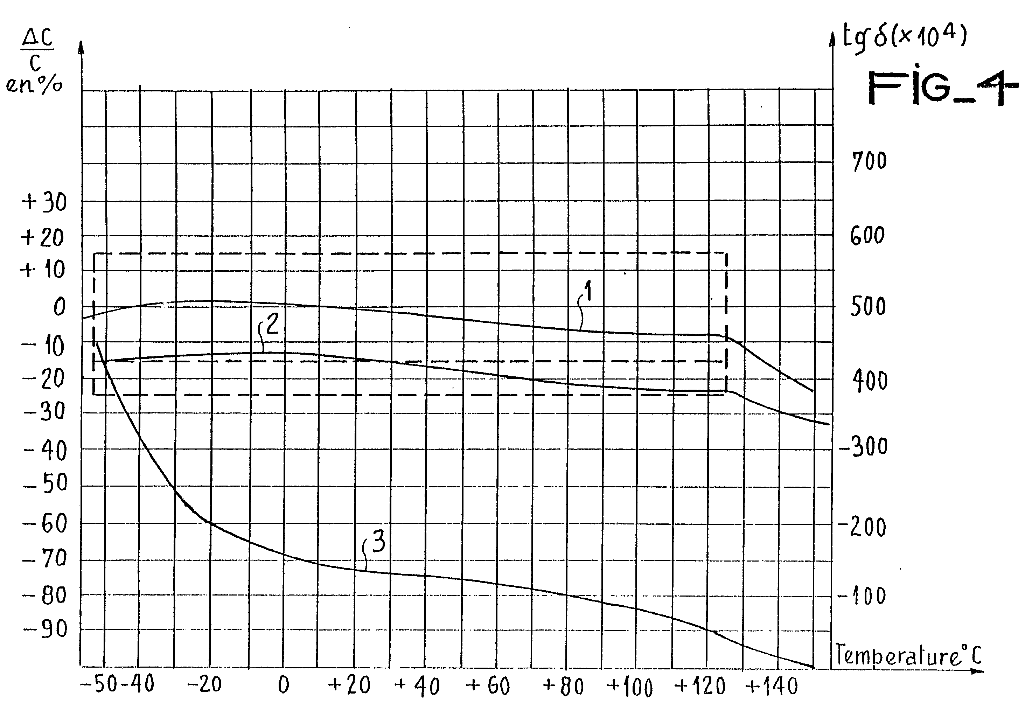

L'article de la revue Ferroelectrics intitulé « Electrode and materials problems in ceramic capacitors » de W.R. Buessem et T.I. Prokorowicz publié dans le volume 10 — pages 225 à 230 — 1976 décrit des compositions à base de titanate de baryum à faible température de frittage utilisant des électrodes du type argent-palladium beaucoup moins onéreuses que les électrodes en or ou palladium. En particulier, la figure 6 de cet article montre des résultats de mesure de la variation relative de capacité en fonction de la température pour un diélectrique de constante égale à 1 450. La courbe de variation sous tension de 19,7 KV/cm soit 2 volts/μm correspond bien à la classe BX, c'est-à-dire que la variation de capacité dudit diélectrique utilisé en feuille cuite de 25 μm sous 50 volts (tension nominale) répond bien à cette classe de produit. Toutefois, l'article signale simplement que cette composition est réalisée à base de titanate de baryum, d'un verre et d'additifs non précisés. Les brevets américains 3 619 220, 3 682 766 et 3 811 937 auxquels l'article semble renvoyer concernant ces compositions montrent que celles-ci sont à base de verre comportant essentiellement de l'oxyde de cadmium (environ 33 %) ainsi que de l'oxyde de bismuth et de l'oxyde de plomb (25 % en poids pour chacun). Parmi les additifs possibles, il semble que les oxydes de néodyme et de lanthane puissent convenir.

Toutefois, ainsi que cela est montré clairement dans l'article cité ci-dessus, ces compositions ne répondent pas toutes à la classe BX et celles qui y répondent ne sont pas décrites. De plus, ces dernières ont une constante diélectrique relativement faible.

Les compositions selon l'invention ne présentent pas cet inconvénient tout en ayant une excellente tenue en température en l'absence et en présence de champ électrique extérieur leur permettant d'atteindre pour certaines d'entre elles la classe BX. (Cette classe de composants se définit notamment par une variation relative de capacité Δ C/C entre − 55 °C et + 125 °C inférieure ou égale à ± 15 % pour un signal de 1 V à la fréquence de 1 KHz et par une variation relative de capacité inférieure à + 15 % et à − 25 % en présence d'un champ continu extérieur de l'ordre de 50 Volts. Les définitions précises peuvent être trouvées dans la norme américaine MIL C 11015 D).

Dans ce but, les compositions selon l'invention sont caractérisées en ce qu'elles comportent un mélange comprenant de 80 à 94 % en poids de titanate de baryum, de 1 à 3 % en poids d'oxyde de néodyme, de 0 à 4 % en poids d'oxyde de bismuth, de 2 à 5 % en poids de titanate de bismuth et de 2 à 8 % en poids de fritte de verre.

Selon un mode préférentiel de réalisation, les compositions selon l'invention sont caractérisées en ce qu'elles comportent de 1 à 4 % en poids d'oxyde de bismuth.

Ainsi qu'on le verra par la suite, on a en effet constaté que de telles compositions (connues de l'homme de l'art comme des compositions du type II), non seulement avaient une température de frittage abaissée par rapport aux températures habituelles de frittage des compositions à base de titanate de baryum, mais que lesdites compositions possédaient également de manière surprenante, des propriétés électriques excellentes dans une très large gamme de température.

De préférence, on utilisera un titanate de baryum non stœchiométrique et comportant un rapport molaire Ti O$_2$/Ba O compris entre 1,06 et 1,09.

Selon un mode préférentiel de réalisation, les compositions selon l'invention comporteront plus de 1,4 % en poids d'oxyde de néodyme et de préférence de 1,4 % à 2 % en poids. On a en effet constaté de manière surprenante, que, toutes choses égales par ailleurs, une quantité d'oxyde de néodyme supérieure à 1,4 % en poids de la composition totale permettait d'obtenir des compositions répondant bien à la norme BX, en particulier aux basses températures. Mais on a également constaté que l'augmentation de la concentration en poids d'oxyde de néodyme tendait à augmenter la variation relative de capacité aux températures élevées.

Les frittes de verre utilisables dans le cadre de la présente invention peuvent avoir différentes compositions. Ces frittes de verre sont réalisées ainsi que cela est bien connu de l'homme de métier, par mélange des différents ingrédients servant à réaliser le verre, puis fusion de ceux-ci à température élevée, refroidissement à température ambiante afin d'obtenir un verre qui est ensuite broyé en très fines particules, cette poudre étant dénommée fritte de verre. On a constaté qu'il était nécessaire d'utiliser des frittes de verre comportant au moins 70 % en poids d'oxyde de bismuth, les autres composants étant l'oxyde de plomb et/ou l'oxyde de bore. Une composition ayant donné toute satisfaction comprenait sensiblement 81 % en poids d'oxyde de bismuth, 17 % en poids d'oxyde de plomb et 2 % en poids d'oxyde de bore.

Afin d'améliorer encore les propriétés électriques et/ou abaisser la température de frittage de ces composants, on pourra leur ajouter jusqu'à 2 % en poids des adjuvants habituels bien connus de l'homme de l'art pour parvenir à ce but. En particulier, on pourra rajouter de l'oxyde de zinc et/ou de l'oxyde de manganèse, ainsi que leurs différents mélanges, dans une proportion en poids de préférence de l'ordre de 0,5 %.

2

**0 088 009**

L'invention concerne également des condensateurs céramiques multi-couches comportant des électrodes ayant au moins 70 % en poids d'argent, les 30 % restants étant constitués de palladium. Ces condensateurs sont obtenus selon la technique bien connue de l'homme de métier de dépôt des électrodes par sérigraphie sur la couche diélectrique et superposition des couches ainsi réalisées, les électrodes de rangs pairs et de rangs impairs étant respectivement reliées entre elles, l'ensemble étant fritté à haute température.

L'invention sera mieux comprise à l'aide des exemples de réalisation suivants, donnés à titre non limitatif, conjointement avec les figures qui représentent :

la figure 1, une courbe de variation relative de la capacité et de la tangente de l'angle de perte du condensateur de l'exemple 1,

la figure 2, une courbe de variation relative de la capacité et de la tangente de l'angle de perte du condensateur de l'exemple 2,

la figure 3, une courbe de variation relative de la capacité et de la tangente de l'angle de perte du condensateur de l'exemple 3,

la figure 4, une courbe de variation relative de la capacité et de la tangente de l'angle de perte du condensateur de l'exemple 4.

Exemple 1

On mélange dans une jarre en porcelaine contenant 7 kg de billes de zircone, 2 litres de solvant, 200 g de polyméthacrylate de méthyl et 2 kg de poudre ayant la composition ci-dessous :

| | |
|---|---|
| $Ba\ Ti\ O_3$ | 90,03 |
| Oxyde de néodyme $Nd_2\ O_2$ | 1,12 |
| Oxyde de manganèse $Mn\ O$ | 0,21 |
| Titanate de bismuth $Bi_2\ O_3\ 2\ Ti\ O_2$ | 2,80 |
| Fritte de verre (constitué de 81 % en poids de $Bi_2\ O_3$, 17 % de $Pb\ O$, 2 % de $B_2\ O_3$) | 4,01 |
| $Bi_2\ O_3$ | 1,83 |
| Rapport stœchiométrique de $Ba\ Ti\ O_3$ $Ti\ O_2/Ba\ O = 1,08$ | |

(Tous les pourcentages donnés ci-dessus sont des pourcentages en poids).

L'ensemble de ces constituants est mélangé pendant environ 15 heures. La barbotine obtenue est coulée sur un support rigide et lisse, puis séchée. A l'aide de cette feuille de céramique, on réalise des condensateurs multi-couches constitués d'un empilement alterné de couches diélectriques céramiques et d'électrodes métalliques. Celles-ci sont déposées sur les diélectriques selon la technique bien connue de la sérigraphie. Elles sont constituées d'un alliage palladium-argent comportant 70 % en poids d'argent. Les condensateurs ainsi réalisés comportaient 21 couches métallisées ayant des fonctions d'armatures, les couches de rangs pairs et les couches de rangs impairs étant respectivement reliées entre elles. Ces condensateurs sont ensuite frittés à une température de 1 130 °C sous air. Chaque couche de céramique a une épaisseur d'environ 27 μm. Les résultats obtenus sont mentionnés dans le tableau I ci-après :

Tableau I

| | |
|---|---|
| Capacité | 144 nF |
| Tangente $\delta \times 10^{+4}$ (sous tension 1 volt à 1 KHz) | 200 |
| Résistance d'isolement sous 63 volts | 93 G $\Omega$ |
| Variation relative de capacité $\Delta C/C$ entre 0 et 1 volt par μm | − 1,4 % |
| Constante diélectrique à 20 °C | 2 350 |
| Coefficient de vieillissement naturel à 20° | − 0,4 %/décade |
| Dimension du pavé céramique | 1,1 × 3,4 × 4,7 mm |

Dans le tableau I ci-dessus, on peut constater que le diélectrique selon l'invention ainsi que les condensateurs réalisés à partir de ce diélectrique possèdent une constante élevée et une très bonne stabilité en fonction de la température.

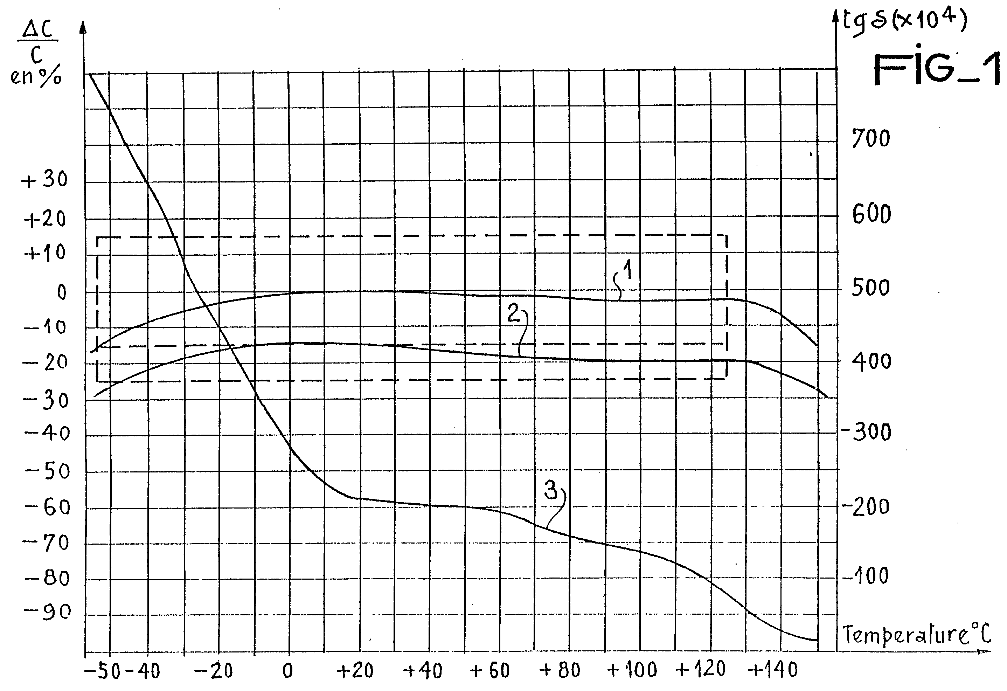

Des résultats détaillés de mesure de variation relative de la capacité $\Delta C/C$ sont donnés sur la figure 1 en fonction de la température. En abscisses, sont portées les températures de − 55 °C et + 125 °C, tandis qu'en ordonnées sont portées les variations relatives de la capacité $\Delta C/C$ en pourcentage. La courbe N° 1 montre les variations relatives de capacité des condensateurs de l'exemple 1 sous un volt efficace à 1 KHz. La valeur nominale de la capacité a été prise à 25 °C, ce qui correspond à cette température à $\Delta C/C$ égal à 0.

La courbe N° 2 représente la variation relative de capacité $\Delta C/C$ en présence d'un champ continu de polarisation de 63 volts, mesurée à l'aide d'un signal de 1 Volt ayant une fréquence de 1 KHz. Là encore, les résultats obtenus sont particulièrement excellents, puisque l'effet de la tension continue est relativement faible eu égard à la valeur élevée de la constante diélectrique.

3

On a également représenté sur la figure 1 la courbe N° 3 qui représente la variation de la tangente de l'angle de perte, tangente $\delta$ en fonction de la température. Les ordonnées pour l'interprétation de cette courbe sont lues à droite de la figure. Cette courbe indique la tendance générale de variation de cet angle de perte.

Cette composition ainsi qu'on peut le constater sur la figure 1 n'est pas éloignée de la norme BX puisque sous une tension de 0 Volt, la norme est respectée, tandis que sous une tension continue de 63 Volts (et non 50 Volts comme dans cette norme), $\Delta$ C/C est à $-$ 55 °C légèrement trop fort.

### Exemple 2

On prépare dans les mêmes conditions que celles indiquées dans l'exemple 1 un mélange contenant également 2 kg de poudre dont les proportions sont données ci-dessous :

| | |
|---|---|
| Titanate de baryum Ba Ti $O_3$ | 88,75 |
| Oxyde de néodyme | 1,37 |
| Oxyde de manganèse | 0,23 |
| Oxyde de zinc | 0,23 |
| Titanate de bismuth | 3,05 |
| Oxyde de bismuth | 1,99 |
| Fritte de verre (de même composition qu'à l'exemple 1) | 4,37 |
| Rapport stœchiométrique de Ba Ti $O_3$ Ti $O_2$/Ba O = 1,08 | |

Des condensateurs céramiques multi-couches sont réalisés comme dans l'exemple 1 dans les mêmes conditions mais frittés à une température de 1168 °C. Les résultats obtenus sont rassemblés dans le tableau II ci-après.

### Tableau II

| | |
|---|---|
| Capacité | 114 nF |
| Tangente $\delta \times 10^{+4}$ (sous 1 volt à 1 KHz) | 200 |
| Résistance d'isolement sous 63 volts | 160 G $\Omega$ |
| Variation relative de capacité entre 0 et 1 volt par $\mu$m | $-$ 1,8 % |
| Constance diélectrique à 20 °C | 2 275 |
| Coefficient de vieillissement à 20 °C | $-$ 0,4 %/décade |
| Nombre de couches métallisées (Pd-Ag 30-70) | 34 |
| Dimensions du pavé céramique | 0,94 $\times$ 2,5 $\times$ 3,2 mm |

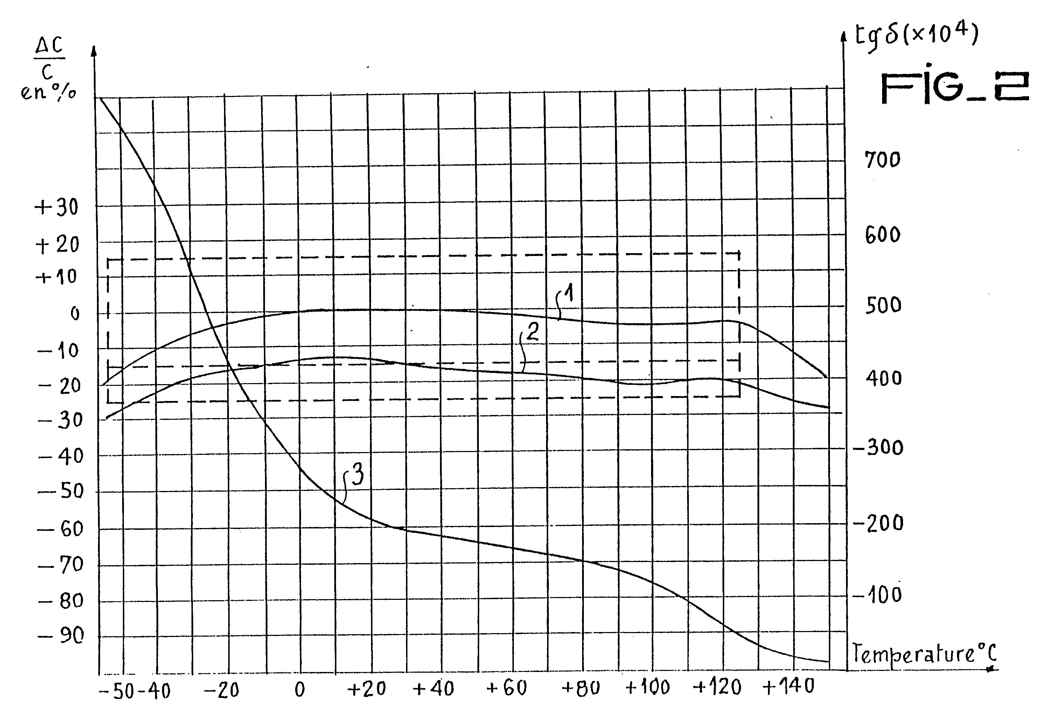

Les courbes de variation relative de capacité en fonction de la température représentée sur la figure 2. Sur cette figure 2, les notations en abscisses et en ordonnées et la signification des différentes courbes sont les mêmes que dans le cas correspondant de l'exemple 1.

La courbe N° 2 de la figure 2 qui correspond à la courbe N° 2 de la figure 1 montre également un excellent comportement de la capacité en fonction de la température sous la tension nominale.

La courbe N° 3 qui correspond à la courbe N° 3 de la figure 1 donne la variation de la tangente de l'angle de perte, en fonction de la température.

### Exemple 3

On prépare dans les mêmes conditions que celles indiquées dans l'exemple 1 un mélange contenant 2 kg de poudre dont les proportions sont données ci-dessous :

| | |
|---|---|
| Titanate de baryum Ba Ti $O_3$ | 88,30 |
| Oxyde de néodyme | 1,52 |
| Oxyde de manganèse | 0,23 |
| Oxyde de zinc | 0,23 |
| Titanate de bismuth | 3,03 |
| Oxyde de bismuth | 1,98 |
| Fritte de verre (identique à l'exemple 1) | 4,70 |
| Rapport stoechiométrique de Ba Ti $O_3$ Ti $O_2$/Ba O = 1,08 | |

Des condensateurs céramiques multi-couches sont réalisés comme dans l'exemple 1 et les résultats de mesures obtenus sont les suivants :

(Voir tableau III page 5)

4

Tableau III

| | |
|---|---|
| Capacité | 66 nF |
| Tangente $\delta \times 10^4$ (sous 1 volt à 1 KHs) | 200 |
| Résistance d'isolement sous 63 volts | 300 G $\Omega$ |
| Variation relative de capacité entre 0 et 1 volt par $\mu$m | $- 2\%$ |
| Constance diélectrique à 20 °C | 2 000 |
| Coefficient de vieillissement naturel à 20 °C | $- 0,5\%$/décade |
| Nombre de couches métallisées (Pd-Ag 30-70) | 21 |
| Dimension du pavé céramique | $0,8 \times 2,5 \times 3,2$ mm |
| Classe de température (norme MIL C 11015 D) | BX |

Dans cet exemple, la stabilité de la capacité, en fonction de la température est améliorée, tandis que la résistance d'isolement sous 63 Volts est nettement plus élevée.

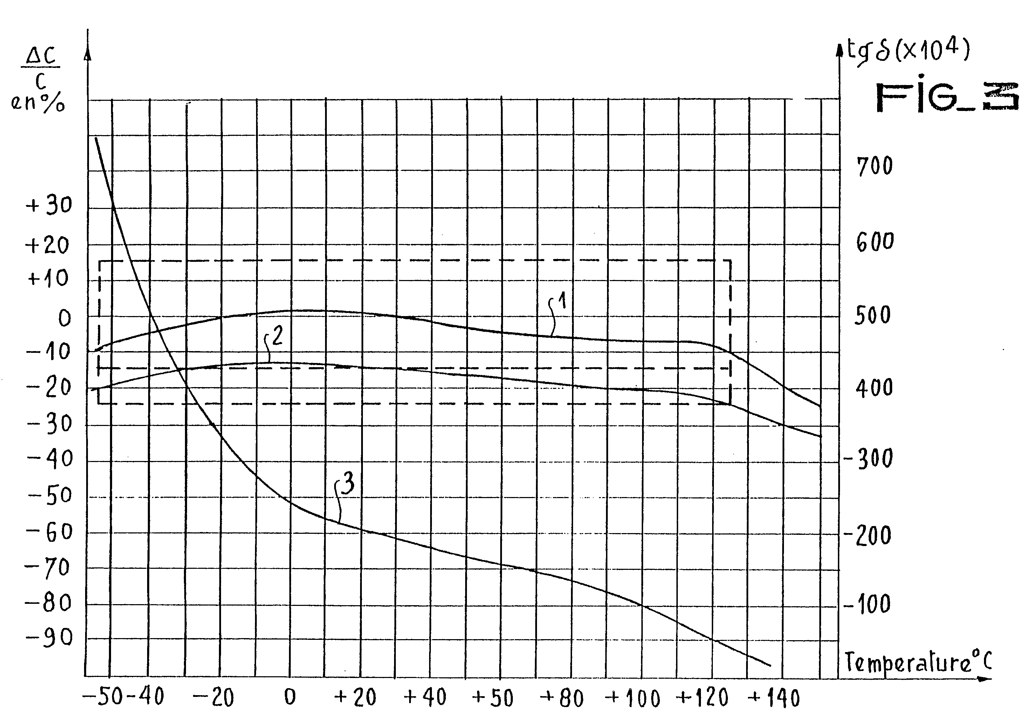

Sur les condensateurs réalisés conformément à cet exemple, on a réalisé les mêmes mesures que dans le cas des exemples 1 et 2, mesures représentées sur la figure 3, sur laquelle les courbes 1, 2 et 3 ont la même signification que sur les figures précédentes.

Exemple 4

On prépare dans les mêmes conditions que celles indiquées dans l'exemple 1 un mélange contenant également 2 kg de poudre dont les proportions sont données ci-dessous :

| | |
|---|---|
| Titanate de baryum | 88,96 |
| Oxyde de néodyme | 1,88 |
| Oxyde de manganèse | 0,23 |
| Titanate de bismuth | 2,55 |
| Oxyde de bismuth | 2,00 |
| Fritte de verre (même composition que dans les exemples précédents) | 4,38 |
| Rapport stœchiométrique de Ba Ti $O_3$ Ti $O_2$/Ba O = 1,08 | |

Des condensateurs céramiques multi-couches sont réalisés dans les conditions indiquées au tableau IV et les résultats sont rassemblés dans le même tableau :

Tableau IV

| | |
|---|---|
| Capacité | 922 nF |
| Tg $\delta \times 10^4$ (1 volt - 120 Hz) | 200 |
| Résistance d'isolement sous 63 volts | 30 G $\Omega$ |
| Variation relative de capacité entre 0 et 1 volt par $\mu$m | $- 1,8\%$ |
| Constance diélectrique à 20 °C | 2270 |
| Coefficient de vieillissement naturel à 20 °C | $- 0,4\%$/décade |
| Nombre de couches métallisées (Pd-Ag 30-70) | 48 |
| Dimensions du pavé céramique | $5,4 \times 6,3 \times 1,5$ mm |
| Classe de température (norme MIL C 11015 D) | BX |

Les courbes de variation relatives de capacité en fonction de la température sont représentées figure 4 sans et avec tension appliquée (63 V). On observe un excellent comportement du condensateur en fonction de la température dans un très large intervalle ($- 55$ à $+ 125$ °C) compte tenu de la valeur très élevée de la constante diélectrique du matériau (2270).

Les exemples ci-dessus ainsi que les courbes correspondantes montrent donc clairement les résultats inattendus et exceptionnels des compositions céramiques selon l'invention, en particulier lorsque lesdites compositions sont utilisées pour la réalisation de condensateurs céramiques multi-couches. Les compositions des exemples 3 et 4 permettent de réaliser des condensateurs céramiques multicouches de classe BX.

**Revendications**

1. Composition céramique diélectrique, caractérisée en ce qu'elle est constituée d'un mélange comportant de 80 % à 94 % en poids de titanate de baryum, de 1 à 3 % en poids d'oxyde de néodyme, de 0 à 4 % en poids d'oxyde de bismuth, de 2 à 5 % en poids de titanate de bismuth $Bi_2 O_3$ 2 Ti $O_2$ et de 2 à 8 % en poids de fritte de verre comportant plus de 70 % en poids d'oxyde de bismuth, les autres composants étant de l'oxyde de plomb et/ou de l'oxyde de bore, l'ensemble étant choisi pour faire 100 % en poids.

2. Composition céramique diélectrique selon la revendication 1, caractérisée en ce qu'elle comporte plus de 1,4 % en poids d'oxyde de néodyme.

3. Composition céramique diélectrique selon la revendication 1, caractérisée en ce qu'elle comporte de 1,4 % à 2 % en poids d'oxyde de néodyme.

4. Composition céramique diélectrique selon l'une des revendications 1 à 3, caractérisée en ce qu'elle comporte de 1 à 4 % en poids d'oxyde de bismuth.

5. Composition céramique diélectrique selon l'une des revendications 1 à 4, caractérisée en ce que le titanate de baryum comporte un rapport molaire Ti $O_2$/Ba O compris entre 1,06 et 1,09.

6. Composition céramique diélectrique selon l'une des revendications 1 à 5, caractérisée en ce que la fritte de verre comporte sensiblement 81 % en poids d'oxyde de bismuth, 17 % en poids d'oxyde de plomb, et 2 % en poids d'oxyde de bore.

7. Composition céramique diélectrique selon l'une des revendications 1 à 6, caractérisée en ce qu'elle comporte en outre de 0 à 2 % en poids d'adjuvant.

8. Composition céramique diélectrique selon la revendication 7, caractérisée en ce qu'elle comporte environ 0,5 % en poids d'adjuvant.

9. Composition céramique diélectrique selon l'une des revendications 7 ou 8, caractérisée en ce que les adjuvants sont choisis parmi les oxydes de zinc, de manganèse et leur mélange.

10. Composition céramique diélectrique selon la revendication 9, caractérisée en ce qu'elle comporte environ 0,25 % en poids d'oxyde de manganèse.

11. Condensateur électrique comportant au moins une couche diélectrique et au moins deux électrodes, caractérisé en ce que la couche diélectrique est conforme à l'une des revendications 1 à 10.

12. Condensateur électrique selon la revendication 11, comportant une pluralité d'électrodes métalliques séparées par des couches diélectriques, les électrodes métalliques de rangs pairs et de rangs impairs étant respectivement connectées entre elles, caractérisé en ce que lesdites électrodes sont constituées d'un mélange de palladium et d'argent comportant au moins 70 % en poids d'argent.

## Claims

1. Dielectric ceramic composition, characterized in that it is constituted of a mixture comprising 80 to 94 % by weight of barium titanate, 1 to 3 % by weight of neodymium oxide, 0 to 4 % by weight of bismuth oxide, 2 to 5 % by weight of bismuth titanate $Bi_2 O_3$ 2 Ti $O_2$ and 2 to 8 % by weight of glass frit, the remaining components being lead oxide and/or boron oxide, and the entire composition being selected to obtain 100 % by weight.

2. Dielectric ceramic composition according to claim 1, characterized in that it comprises more than 1.4 % by weight of neodymium oxide.

3. Dielectric ceramic composition of claim 1, characterized in that it comprises 1.4 to 2 % by weight of neodymium oxide.

4. Dielectric ceramic composition according to any of claims 1 to 3, characterized in that it comprises 1 to 4 % by weight of bismuth oxide.

5. Dielectric ceramic composition according to any of claims 1 to 4, characterized in that the barium titanate has a molecular ratio Ti $O_2$/Ba O comprised between 1.06 and 1.09.

6. Dielectric ceramic composition according to any of claims 1 to 5, characterized in that the glass frit comprises substantially 81 % by weight of bismuth oxide, 17 % by weight of lead oxide, and 2 % by weight of boron oxide.

7. Dielectric ceramic composition according to any of claims 1 to 6, characterized in that it further comprises 0 to 2 % by weight of an additive.

8. Dielectric ceramic composition according to claim 7, characterized in that it comprises substantially 0.5 % by weight of an additive.

9. Dielectric ceramic composition according to claim 7 or 8, characterized in that the additives are selected among the zinc and manganese oxides and their mixture.

10. Dielectric ceramic composition according to claim 9, characterized in that it comprises substantially 0.25 % by weight of manganese oxide.

11. Electric capacitor comprising at least one dielectric layer and at least two electrodes, characterized in that the dielectric layer is in conformity with any of claims 1 to 10.

12. Electric capacitor according to claim 11, comprising a plurality of metallic electrodes separated by dielectric layers, the metallic electrodes of pair and odd orders being respectively interconnected, characterized in that said electrodes are formed of a mixture of palladium and silver comprising at least 70 % by weight of silver.

## Patentansprüche

1. Dielektrische Keramik-Zusammensetzung, dadurch gekennzeichnet, daß sie aus einer Mischung aus 80 bis 94 Gew.% Bariumtitanat, 1 bis 3 Gew.% Neodymoxid, 0 bis 4 Gew.% Wismutoxid, 2 bis 5 Gew.% Wismuttitanat $Bi_2 O_3$ 2 Ti $O_2$ und 2 bis 8 Gew.% Glasfritte besteht, die mehr als 70 Gew.% Wismutoxid enthält und deren übrige Bestandteile Bleioxid und/oder Boroxid sind, wobei das Ganze so ausgewählt ist, daß 100 Gew.% erreicht werden.

2. Dielektrische Keramik-Zusammensetzung gemäß dem Anspruch 1, dadurch gekennzeichnet, daß sie mehr als 1,4 Gew.% Neodymoxid enthält.

3. Dielektrische Keramik-Zusammensetzung gemäß dem Anspruch 1, dadurch gekennzeichnet, daß sie 1,4 bis 2 Gew.% Neodymoxid enthält.

4. Dielektrische Keramik-Zusammensetzung gemäß einem der Ansprüche 1 bis 3, dadurch gekennzeichnet, daß sie 1 bis 4 Gew.% Wismutoxid enthält.

5. Dielektrische Keramik-Zusammensetzung gemäß einem der Ansprüche 1 bis 4, dadurch gekennzeichnet, daß das Bariumtitanat ein Mol-Verhältnis Ti $O_2$/Ba O zwischen 1,06 und 1,09 aufweist.

6. Dielektrische Keramik-Zusammensetzung gemäß einem der Ansprüche 1 bis 5, dadurch gekennzeichnet, daß die Glasfritte weitgehend 81 Gew.% Wismutoxid, 17 Gew.% Bleioxid und 2 Gew.% Boroxid enthält.

7. Dielektrische Keramik-Zusammensetzung gemäß einem der Ansprüche 1 bis 6, dadurch gekennzeichnet, daß sie außerdem 0 bis 2 Gew.% Zusatz enthält.

8. Dielektrische Keramik-Zusammensetzung gemäß Anspruch 7, dadurch gekennzeichnet, daß sie ca. 0,5 Gew.% Zusatz enthält.

9. Dielektrische Keramik-Zusammensetzung gemäß der Ansprüche 7 bzw. 8, dadurch gekennzeichnet, daß die Zusätze unter Zinkoxid, Manganoxid und ihren Mischungen ausgewählt sind.

10. Dielektrische Keramik-Zusammensetzung gemäß Anspruch 9, dadurch gekennzeichnet, daß sie ca. 0,25 Gew.% Manganoxid enthält.

11. Elektrischer Kondensator mit mindestens einer dielektrischen Schicht und wenigstens zwei Elektroden, dadurch gekennzeichnet, daß die dielektrische Schicht einem der Ansprüche 1 bis 10 entspricht.

12. Elektrischer Kondensator gemäß Anspruch 11, mit einer Vielzahl von metallischen Elektroden, die durch elektrische Schichten getrennt sind, wobei die metallischen Elektroden geradzahliger und ungeradzahliger Reihen jeweils untereinander verbunden sind, dadurch gekennzeichnet, daß die genannten Elektroden aus einer Palladium- Silbermischung mit mindestens 70 Gew.% Silber Bestehen.

FIG_1

FIG_2

0 088 009

FIG_3

$\frac{\Delta C}{C}$ en %

tg δ (×10⁴)

Temperature °C

0 088 009

FIG_4

600 880 0